# EUROPÄISCHE PATENTSCHRIFT

(11) **EP 2 401 579 B1**
(45) Veröffentlichungstag und Bekanntmachung des Hinweises auf die Patenterteilung: **02.09.2015**
(21) Anmeldenummer: 10703181.7
(22) Anmeldetag: 03.02.2010
(51) Int. Cl.: G01C 19/56, G01C 19/574

(54) **MIKRO-ELEKTRO-MECHANISCHER SENSOR**
ELECTROMECHANIC MICROSENSOR
MICROCAPTEUR ÉLECTROMÉCANIQUE

(30) Priorität: 27.02.2009 DE 102009001247
(43) Veröffentlichungstag der Anmeldung: 04.01.2012
(73) Patentinhaber: Maxim Integrated GmbH, 8403 Lebring (AT)
(72) Erfinder: KEMPE, Volker, A-8501 Lieboch (AT)
(74) Vertreter: Bergmeier, Werner
(86) Internationale Anmeldenummer: PCT/EP2010/051300
(87) Internationale Veröffentlichungsnummer: WO 2010/097275

(56) Entgegenhaltungen:
- US-A- 5 349 855
- US-A1- 2007 266 785

## Beschreibung

Die vorliegende Erfindung betrifft einen mikro-elektro-mechanischen Sensor (MEMS) mit linear in einer x-y-Ebene bewegten Antriebselementen, welche auf einem Substrat angeordnet sind zur Ermittlung von drei Komponenten des Drehratenvektors des Substrats, wobei zwei Gruppen von Antriebselementen existieren, die im Wesentlichen in rechtwinklig zueinander verlaufenden Richtungen angetrieben sind.

Bekannt sind MEMS-Sensoren bzw. MEMS-Gyroskope, bei welchen oszillierend angetriebene Antriebselemente auf einem Substrat befestigt sind. Diese Antriebselemente sind in der Regel mit elastisch verformbaren Federn auf dem Substrat angeordnet, wodurch die oszillierende Bewegung ermöglicht wird. Das gesamte Antriebselement oder zumindest ein Teil davon ist darüber hinaus derart gelagert, dass es bei einer Drehung des Substrats um eine vorbestimmte Achse aufgrund von Corioliskräften, welche auf das bewegte Antriebselement wirken, in einer vorbestimmten Richtung oszillierend ausgelenkt wird. Auch hierfür sind in der Regel Federn vorgesehen, welche diese Auslenkung erlauben.

Bei der Gestaltung der Antriebselemente wird stets versucht, dass die Elastizität der Federn nur in vorbestimmten Richtungen gegeben ist. Überlagerte Bewegungen an Federn sollen weitgehend ausgeschlossen sein. Um die Drehung des Substrats um mehrere Achsen feststellen zu können, das heißt zur Ermittlung von mehreren Komponenten des Drehratenvektors des Substrats, ist es bekannt, dass mehrere solcher Sensoren, welche in der Lage sind eine Komponente des Drehratenvektors festzustellen, miteinander kombiniert werden. So werden beispielsweise gleichartige Antriebselemente auf einem Substrat oder mehrere Sensoren derart zueinander angeordnet, dass die zu ermittelten Komponenten des Drehratenvektors durch Auslenkung der Antriebselemente aufgrund der auftretenden Corioliskräfte ermittelbar sind. Die einzelnen Sensoren oder die Teile davon werden dementsprechend so zueinander angeordnet, dass die einzelnen Komponenten des Drehratenvektors festgestellt werden können. Nachteilig hierbei ist es, dass jeder Sensor eine individuelle Antriebsregelung benötigt und dass beispielsweise aufgrund von Fertigungstoleranzen Unterschiede in den Frequenzen der Bewegungen der Antriebselemente nicht auszuschließen sind. Hierdurch entstehen unterschiedliche Corioliskräfte, welche wiederum zu einem ungleichen Auslenken der Antriebselemente führt. Der hierdurch entstehende Korrekturaufwand führt zu erheblichen Mehraufwendungen in der Steuerelektronik.

Weiterhin bekannt sind Mikro-elektromechanische Gyroskope, welche eine Vielzahl gemeinsam bewegter Antriebselemente aufweisen, um so mehrere Komponenten des Drehratenvektors zu ermitteln. Derartige Sensoren nutzen bezüglich ihrer Baugröße nicht optimal die in MEMS-Technologien zur Verfügung stehende rechteckige Standfläche aus und führen dementsprechend zu zusätzlichen Kostenaufwand.

Die US 5,349,855 A offenbart in Figur 1D einen mikro-elektro-mechanischen Sensor (MEMS) mit linear in einer x-y-Ebene bewegten Antriebselementen, welche auf einem Substrat angeordnet sind, wobei zwei Gruppen von Antriebselementen existieren, die im Wesentlichen in rechtwinklig zueinander verlaufenden Richtungen angetrieben sind. Die vier Massen sind mit einer auf dem Substrat gelagerten Kopplungseinrichtung miteinander verbunden. Die Kopplungseinrichtung weist flexible Federn auf, die mit jeweils zwei Ankern auf dem Substrat befestigt sind und sich bei einer Bewegung der Antriebselemente verbiegen. Die Genauigkeit des MEMS-Sensors hängt wesentlich von der Fertigungsgenauigkeit und Gleichmäßigkeit der elastischen Federn ab.

Aufgabe der vorliegenden Erfindung ist es, ein einfaches und kostengünstiges MEMS-Gyroskop zu schaffen, welches einfach herzustellen ist und dennoch eine hohe Messgenauigkeit aufweist.

Die Aufgabe wird gelöst mit einem mikro-elektro-mechanischen Sensor mit den Merkmalen des Anspruches 1.

Ein erfindungsgemäßer mikro-elektro-mechanischer Sensor, auch MEMS-Gyroskop genannt, weist linear in einer x-y Ebene bewegte Antriebselemente auf. Die Antriebselemente sind auf einem Substrat angeordnet und dienen der Ermittlung von drei Komponenten des Drehratenvektors des Substrats. Es sind zwei Gruppen von Antriebselementen vorgesehen, die im Wesentlichen in rechtwinklig zueinander verlaufenden Richtungen angetrieben sind. Erfindungsgemäß sind die rechtwinklig zueinander bewegten Antriebselemente mittels einer drehbar auf dem Substrat gelagerten Kopplungseinrichtung zur Synchronisation der Bewegungen miteinander verbunden. Handelt es sich um zwei rechtwinklig zueinander bewegte Antriebselemente, so können hiermit zwei Komponenten des Drehratenvektors ermittelt werden. Es sind aber zumindest in einer der beiden Gruppen von Antriebselementen zwei parallel betriebene Antriebselemente vorgesehen, welche durch eine unterschiedliche Auslenkbarkeit aufgrund der auftretenden Corioliskräfte selbst bereits zwei Komponenten des Drehratenvektors ermitteln können.

Erfindungsgemäss sind diese beiden parallel zueinander bewegten Antriebselemente mit dem rechtwinklig hierzu angetriebenen Antriebselement der zweiten Gruppe mit einer erfindungsgemäßen Kopplungseinrichtung zur Synchronisation der Bewegungen miteinander verbunden. Hierdurch können drei Komponenten des Drehratenvektors ermittelt werden, das heißt, dass Drehungen des Sensors bzw. Substrats um die x-Achse, die y-Achse und die z-Achse ermittelbar sind.

Durch die Kopplungseinrichtung werden die rechtwinklig zueinander verlaufenden Bewegungen der beiden Gruppen von Antriebselementen miteinander synchronisiert. Das bedeutet, dass ein synchrones Schwingen der Antriebselemente unterstützt wird. Die Bewegungsrichtung der einen Gruppe von Antriebselementen wird durch die Kopplungseinrichtung in die Bewegungsrichtung der anderen Gruppe von Antriebselementen umgelenkt. Sie sind dabei so steif, dass sie verhindern, dass die Antriebselemente ungleichmäßig oszillieren. Die Kopplungseinrichtung wird von den beiden damit verbundenen Antriebselementen in eine oszillierende Drehbewegung versetzt. Durch die Verbindung der beiden Antriebselemente mit der Kopplungseinrichtung ist sichergestellt, dass die oszillierende Linearbewegung der beiden mit der Kopplungseinrichtung verbundenen Antriebselemente synchron verläuft. Mit der erfindungsgemäßen Kopplungseinrichtung ist es somit möglich, die bewegten Antriebselemente eines MEMS-Gyroskops, welches aus einzelnen für die jeweilige Komponente des Drehratenvektors zuständige Sensoreinrichtungen besteht, miteinander gleichmäßig schwingen zu lassen, wodurch die Reaktion auf die auftretenden Corioliskräfte gleichartig ist und somit eine hohe Messgenauigkeit des erfindungsgemäßen mikro-elektro-mechanischen Sensors erhalten wird. Die Antriebselemente einer Gruppe sind parallel zueinander bewegbar und mindestens jeweils zwei der parallel zueinander bewegten Antriebselemente sind ebenfalls mit Kopplungseinrichtungen miteinander verbunden.

In einer vorteilhaften Ausführung der Erfindung sind die mindestens jeweils zwei der parallel zueinander bewegten Antriebselemente mit den Kopplungseinrichtungen verbunden, die in Antriebsrichtung starr sind und damit die Antriebsbewegung von jeweils zwei Antriebselementen synchronisieren. Hierdurch wird sichergestellt, dass nicht nur die rechtwinklig zueinander bewegten Antriebselemente synchron zueinander schwingen, sondern auch die parallel zueinander bewegten Antriebselemente. Insgesamt wird damit ein System erhalten, welches alle drei Komponenten des Drehratenvektors gleichermaßen erfasst und aufgrund synchron schwingender Antriebselemente von vergleichbaren Drehungen des Sensors auch vergleichbare Corioliskräfte und damit Auslenkungen erzeugt. Die Ermittlung der entsprechenden Drehung ist hierdurch mit hoher Genauigkeit möglich. Zudem wird ein 3D-Gyro geschaffen, welcher sehr einfach in seinem Aufbau ist und eine zur Verfügung stehende rechteckige Standfläche optimal ausnutzt sowie eine hohe Messgenauigkeit bei moderatem elektronischen Steueraufwand aufweist.

In einer vorteilhaften Ausbildung der Erfindung sind die mehreren Kopplungseinrichtungen zur Synchronisation der parallelen Bewegungen der Antriebselemente gleichartig ausgebildet. Hierdurch wird sichergestellt, dass die Übertragung der Bewegungsrichtungen synchron verläuft, auch wenn zur Ermittlung einer Komponente des Drehratenvektors Antriebselemente eines Teilbereichs des Sensors vorgesehen sind, welche gegenläufig oszillieren. Die gegenläufig oszillierenden Teile der Antriebselemente sind dabei mit eben solchen gegenläufig oszillierenden Bauteilen eines weiteren Antriebselementes, welches parallel hierzu bewegt wird, gleichartig. Die Synchronisation der parallel verlaufenden und gegenläufig angetriebenen Teile der Antriebselemente erfolgt somit ebenfalls gleichartig und synchron.

Eine vorteilhafte Ausbildung der Erfindung besteht auch darin, dass die mehreren Kopplungseinrichtung zur Synchronisation der rechtwinklig zueinander ablaufenden Bewegungen gleichartig sind. Auch hierdurch wird sichergestellt, dass auch bei gegenläufigen Bewegungen innerhalb eines Antriebselementes die Synchronisation mit rechtwinklig hierzu betriebenen Antriebselementen gleichartig erfolgt, wodurch auch gleichartige Bewegungen zu erwarten sind.

In einer besonders vorteilhaften Ausbildung der Erfindung ist die Kopplungseinrichtung zur Synchronisation der rechtwinklig zueinander ablaufenden Bewegung eine um einen Anker drehbare Strebe. Die Strebe ist vorzugsweise druck- und zugstabil ausgebildet, so dass durch die Bewegung eines Antriebselements Druck oder auch Zug auf das rechtwinklig zu bewegte Antriebselement ausgeübt werden kann. Hierdurch wird sichergestellt, dass die Kopplungseinrichtung nicht elastisch verformt wird, wodurch die Synchronisation der beiden Bewegungsrichtungen der Antriebselemente nicht mehr gewährleistet wäre. Durch die Steifigkeit der Strebe, welche um einen am Substrat befestigten Anker drehbar ist, wird Druck- oder Zug auf das langsamere Antriebselement ausgeübt, so dass die oszillierende Bewegung letztendlich gleich verläuft.

Als besonders vorteilhafte Ausgestaltung der Strebe hat sich ergeben, dass diese bogenförmig ist. Hierdurch wird die Kraftumlenkung von der einen Bewegungsrichtung in die rechtwinklig hierzu verlaufende andere Bewegungsrichtung optimal eingeleitet.

Vorzugsweise ist die Strebe im Bereich ihres ersten Endes mit dem in x-Richtung angetriebenen Antriebselement und in dem Bereich ihres zweiten Enden mit dem in y-Richtung angetriebenen Antriebselement verbunden. Es wird hierdurch eine geringe bewegte Masse der Strebe erzielt, da lediglich die Verbindung von dem einen Antriebselement zu dem anderen Antriebselement durch die Strebe geschaffen wird.

Um eine besonders stabile Strebe zu schaffen ist es vorteilhaft, wenn die Strebe kreisförmig ausgebildet ist. Hierdurch ist die Strebe selbst bereits ein stabiles Bauteil, welches kaum durch Druck- oder Zugbelastungen verformt werden kann. Die Synchronisation der beiden Antriebselemente erfolgt hierdurch sehr exakt, da Verformungen der Strebe selbst weitgehend auszuschließen sind und dadurch Geschwindigkeitsunterschiede der beiden Antriebselemente nicht mehr auftreten.

Ist vorteilhafterweise zwischen der Strebe und dem Antriebselement eine Federeinrichtung vorgesehen, so können wirkungsvoll Verspannungen, welche durch die rechtwinklig zueinander versetzten Bewegungsrichtungen entstehen könnten, vermieden werden. Die Antriebsenergie zum Betreiben der Bewegungen der Antriebselemente kann damit reduziert werden. Die Antriebselemente schwingen dadurch leichter.

Vorzugsweise ist die Federvorrichtung in Antriebsrichtung steif und rechtwinklig zur Antriebsrichtung weich ausgebildet. Jeweils eine der Federvorrichtungen ist einer Bewegungsrichtung zugeordnet und an der Strebe und dem Antriebselement angeordnet. Hierdurch kann eine Schub- oder Zugkraft in Antriebsrichtung in die Strebe eingeleitet werden. Durch die Drehung der Strebe entstehende Lageänderungen der Verbindungsstellen können durch die in dieser Richtung weich ausgebildete Federvorrichtung ausgeglichen werden, ohne dass es zu Verspannungen kommen würde.

Um eine gleichmäßige Einleitung und Synchronisation der oszillierenden Bewegung zu erzielen ist es besonders vorteilhaft, wenn die Antriebselemente pro Antriebsrichtung paarweise ausgebildet sind. Die Krafteinleitung ist hierdurch besonders gleichmäßig und verspannungsfrei möglich.

Vorzugsweise ist eines der Antriebselemente in x-Richtung angetrieben und mit einem Anker derart auf dem Substrat angeordnet, dass es ganz oder teilweise in y-Richtung auslenkbar ist. Hierdurch ist eine Corioliskraft zu erfassen, welche aufgrund einer Drehbewegung des Substrats um die z-Achse auftritt.

Um eine zweite Komponente des Drehratenvektors zu erfassen, ist es vorteilhaft, wenn eines der Antriebselemente in x-Richtung angetrieben und mit einem Anker derart auf dem Substrat angeordnet ist, dass es ganz oder teilweise um die y-Achse schwenkbar ist. Hierdurch wird eine Corioliskraft erfasst, welche aufgrund einer Drehbewegung des Substrates um die y-Achse auftritt.

Zum Erfassen einer dritten Komponente des Drehratenvektors ist es vorteilhaft, wenn eines der Antriebselemente in y-Richtung angetrieben ist und mit einem Anker derart auf dem Substrat angeordnet ist, dass es ganz oder teilweise um die x-Achse schwenkbar ist. Hierdurch wird eine Corioliskraft erfasst, welche aufgrund einer Drehbewegung des Substrates um die x-Achse auftritt. Durch zwei oder drei der vorgenannten Antriebselemente sind zwei oder drei der Komponenten des Drehratenvektors des Sensors zu erfassen. Der Sensor kann somit durch die Anordnung einfacher und bekannter Antriebselemente drei Drehbewegungen des Sensors erfassen. Durch die Synchronisation der Antriebsbewegungen der Antriebselemente ist es darüber hinaus möglich, dass eine gemeinsame und kostengünstige Antriebsregelung benutzt werden kann und dass genaue Messergebnisse für jede der drei Komponenten des Drehratenvektors zu erhalten sind.

In einer vorteilhaften Ausführung der Erfindung sind die Antriebselemente mit ihnen zugeordneten Antriebselektroden angetrieben. Ein Teil der Antriebselektroden ist an dem Substrat und eine anderer Teil der Elektroden ist an den Antriebselementen befestigt. An die paarweise ausgebildeten Antriebselektroden wird gegenphasig Wechselspannung angelegt, wodurch die Antriebselemente wechselseitig in Richtung der beiden Antriebselektroden des Paares angezogen werden. Hierdurch ist eine oszillierende Bewegung der Antriebselemente zu erhalten.

In einer vorteilhaften Ausführung der Erfindung weisen die Antriebselemente im Wesentlichen einen rechteckigen Grundriss auf. Hierdurch sind sie kompakt auf dem Substrat anordenbar und benötigen insgesamt nur einen geringen, insbesondere rechteckigen Grundriss. Es ist damit ein besonders kleiner Sensor zum Erfassen von zwei oder drei Komponenten des Drehratenvektors zu erhalten.

Um einen besonders ausgeglichenen und ohne störende Drehmomente aufweisenden MEMS-Sensor zu erhalten, ist es vorteilhaft, wenn die Antriebselemente Teilelemente aufweisen, welche in Gegenphase angetrieben sind. Die hierdurch bewegten Massen gleichen einander aus, so dass bei Abwesenheit von Corioliskräften jeweils ein Gesamtdrehmoment der Größe 0 erhalten wird. Der Sensor ist hierdurch in der Lage besonders genaue Messergebnisse zu liefern.

Um Drehungen des Substrates um eine Achse feststellen zu können, ist es vorteilhaft, wenn zumindest an den entsprechenden Antriebselementen die Teilelemente an einem kippbar auf dem Substrat gelagerten Balken angeordnet sind. Insbesondere hier ist es besonders vorteilhaft, wenn die Kopplungseinrichtungen derart ausgebildet sind, dass sie zwar Schub- und Zugkräfte in Antriebsrichtung übertragen können, andererseits aber auch das gegenläufige Schwenken der Antriebsteilelemente aus der x-y-Ebene heraus durch eine hohe Steifigkeit der Kopplungseinrichtung in z-Richtung sichert.

Weitere Vorteile der Erfindung sind in den nachfolgenden Ausführungsbeilspielen beschrieben. Es zeigen:
- **Figur 1**: einen 3D-Gyro mit einem rechteckigen Grundriss und einer bogenförmigen Kopplungseinrichtung und
- **Figur 2**: einen 3D-Gyro mit einem rechteckigen Grundriss und einer kreisförmigen Kopplungseinrichtung.

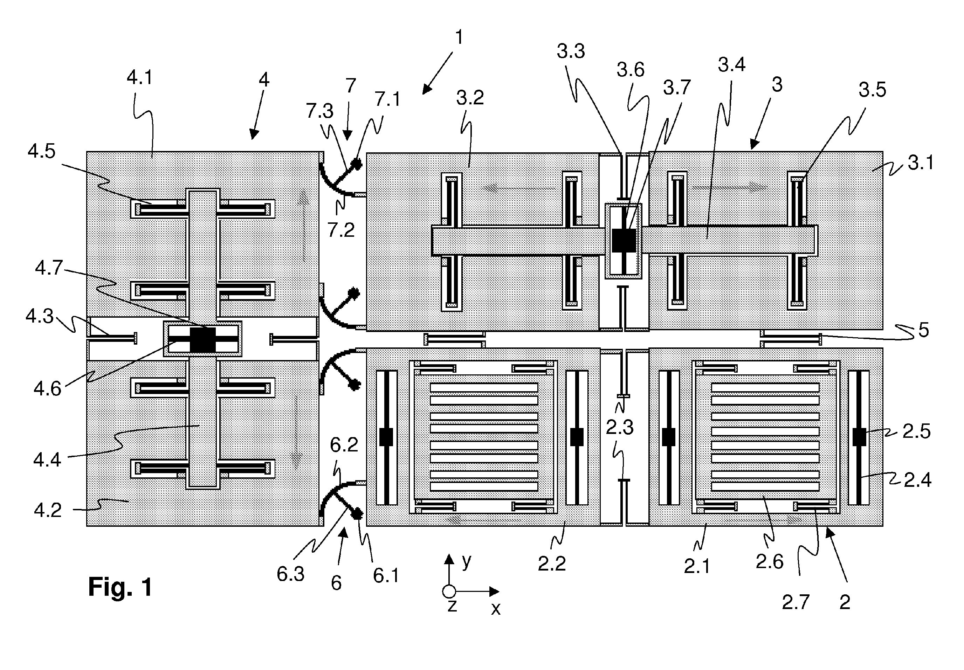

In Figur 1 ist ein 3D-MEMS-Gyro 1 schematisch dargestellt, welcher einer rechteckigen Grundriss aufweist. Der mikro-elektro-mechanische Sensor 1 besteht aus drei Antriebselementen 2, 3 und 4. Jedes der Antriebselemente 2, 3 und 4 ist für die Ermittlung jeweils einer Komponente eines Drehratenvektors vorgesehen. Das Antriebselement 2 besteht aus zwei Teilelementen 2.1 und 2.2. Die Teilelemente 2.1 und 2.2 sind gegensinnig oszillierend mittels nicht dargestellten Antriebselektroden angetrieben. Sie sind mittels eines Federpaares 2.3 miteinander verbunden. Die Federn 2.3 sind in x-Richtung elastisch ausgebildet, so dass die Teilelemente 2.1 und 2.2 einander nähern und sich voneinander entfernen können und in ihrer gegenläufigen Bewegung synchronisiert werden.

Gelagert ist jedes der Teilelemente 2.1 und 2.2 über Federn 2.4 an Ankern 2.5. Innerhalb jedes Teilelements 2.1 und 2.2 sind Sensorelemente 2.6 angeordnet, welche in y-Richtung auslenkbar sind. Hierzu sind die Teilelemente 2.1 und 2.2 und die Sensorelemente 2.6 mit Federpaaren 2.7 miteinander verbunden. Falls das Substrat, auf welchem das Antriebselement 2 mittels des Ankers 2.5 angeordnet ist, in z-Richtung gedreht wird, entsteht eine Corioliskraft, welche die Sensorelemente 2.6 in y-Richtung auslenken. Diese Auslenkung kann mittels beispielsweise nicht dargestellter Elektroden oder Kondensatoren, die innerhalb der angedeuteten Aussparungen auf dem Substrat positioniert werden, ermittelt werden.

Ebenfalls in x-Richtung und gegenläufig oszillierend sind die Teilelemente 3.1 und 3.2 des Antriebselementes 3 angetrieben. Die Teilelemente 3.1 und 3.2 sind mittels Federn 3.3 miteinander verbunden, so dass sich die Teilelemente 3.1 und 3.2 einander nähern und wieder einander entfernen können und dabei synchronisiert werden. Die Antriebselemente 3.1 und 3.2 sind darüber hinaus an einem um die y-Achse schwenkbaren Balken 3.4 mittels Federn 3.5 angeordnet. Die Federn 3.5 erlauben eine Bewegung der Teilelemente 3.1 und 3.2 in x-Richtung relativ zu dem Balken 3.4. Der Balken 3.4 ist mittels einer Feder 3.6 an einem Anker 3.7 auf dem Substrat befestigt. Die Feder 3.6 erlaubt dem Balken 3.4 ein oszillierendes Kippen um die y-Achse sobald eine Drehbewegung des Substrats um die y-Achse auftritt.

Das dritte Antriebselement 4 ist rechtwinklig zu den beiden anderen Antriebselementen 2 und 3 angeordnet und ist in diesem Ausführungsbeispiel wie das Antriebselement 3 aufgebaut. Es kann aber auch eine andere Gestaltung aufweisen. Das Antriebselement 4 besteht aus Teilelementen 4.1 und 4.2, welche mittels Federn 4.3 miteinander verbunden sind. Die Teilelemente 4.1 und 4.2 oszillieren gegenläufig zueinander. Sie sind jeweils an einem Balken 4.4 mittels Federn 4.5 angeordnet, so dass sie in y-Richtung angetrieben werden können. Der Balken 4.4 ist über eine Torsionsfeder 4.6 an einem Anker 4.7 schwenkbar angeordnet. Sobald eine Drehbewegung des Substrats um die x-Achse auftritt erfolgt aufgrund einer Corioliskraft das Schwenken des Balkens 4.4 zusammen mit den Teilelementen 4.1 und 4.2 um die x-Achse.

Zur Synchronisation der Antriebsbewegungen der Antriebselemente 2 und 3 sind diese mit Synchronisationsfedern 5 miteinander verbunden. Die Synchronisationsfedern sind in x-Richtung steif, wodurch die Antriebsbewegungen der Teilelemente 2.1 und 3.1 sowie 2.2. und 3.2 synchron miteinander verlaufen. In z-Richtung sind die Synchronisationsfedern 4 hingegen weich, so dass eine Schwenkbewegung der Teilelemente 3.1 und 3.2 ohne Behinderung möglich ist.

Zur Synchronisation der Bewegung des Antriebselements 2 mit dem Antriebselement 4 ist das Teilelement 2.2 mit dem Teilelement 4.2 mittels einer Kopplungseinrichtung 6 verbunden. Die Kopplungseinrichtung 6 besteht aus zwei, jeweils um einen Anker 6.1 drehbare bogenförmige Streben 6.2. Die Strebe 6.2 ist mittels einer Feder 6.3 an dem Anker 6.1 auf dem Substrat befestigt. Die Enden der Strebe 6.2 sind einerseits an dem Teilelement 2.2 und andererseits an dem Teilelement 4.2 befestigt. Die Bewegungen des Teilelementes 2.2 und des Teilelements 4.2 versetzen die Strebe 6.2 in eine oszillierende Schwingung. Dadurch, dass die Strebe 6.2 steif ausgebildet ist, ist sie in der Lage die Bewegungsrichtung umzulenken um die Bewegungen der Teilelemente 2.2 und 4.2 synchron ablaufen zu lassen. Um einen gleichmäßigen und synchronen Betrieb der Teilelemente 2.2 und 4.2 zu erhalten sind zwei der Kopplungseinrichtungen 6 zwischen den beiden Teilelementen 2.2 und 4.2 angeordnet.

Ebenso wie die Kopplungseinrichtung 6 ist auch die Kopplungseinrichtung 7 ausgebildet. Lediglich die Richtung des Bogens der Strebe 7.2 ist anders ausgerichtet, da sich das Teilelement 4.1 gegenläufig zu dem Teilelement 4.2 bewegt. Auch durch die Kopplungseinrichtung 7 mit dem Anker 7.1, der Strebe 7.2 und der Feder 7.3 wird eine Synchronisation der Bewegung des Teilelementes 3.2 mit dem Teilelement 4.1 erzeugt. Die Streben 6.2 und 7.2 sind bezüglich Schub- und Zug steif, hinsichtlich des Schwenkens aus der x-y Ebene sind sie allerdings nachgiebig ausgebildet. Dies ist erforderlich, um eine Schwenkbewegung des Teilelements 2.2 bzw. 3.2 aus der x-y-Ebene bei einem Schwenken um die y-Achse bzw. des Schwenkens der Teilelemente 4.1 und 4.2 ebenfalls aus der x-y-Achse bei einer Drehbewegung um die x-Achse zu ermöglichen.

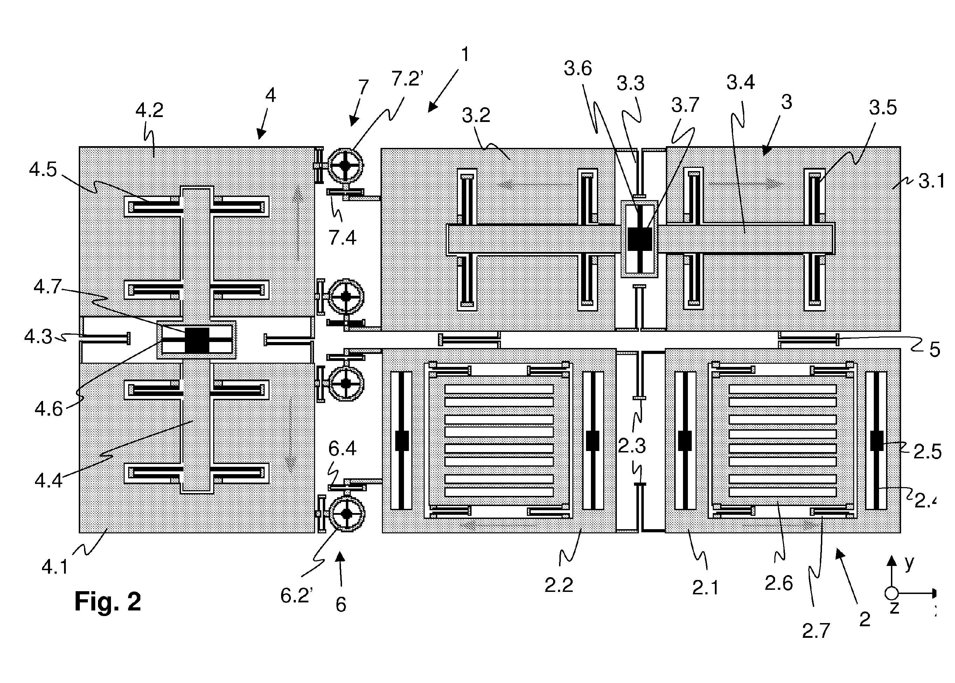

In Figur 2 sind gleiche Antriebselemente 2, 3 und 4 dargestellt. Die Kopplung der Antriebselemente 2 und 3 erfolgt ebenfalls mit Synchronisationsfedern 5. Lediglich die Kopplungseinrichtungen 6 und 7 sind andersartig ausgebildet. Sie bestehen bei diesem Ausführungsbeispiel aus kreisförmig ausgebildeten Streben 6.2' und 7.2'. An den Streben sind Federeinrichtungen 6.4 bzw. 7.4 angeordnet, welche zwar steif sind für die Übertragung der Antriebsbewegungen, allerdings weich sind in einer Richtung rechtwinklig zur Schubeintragung. Hierdurch wird bewirkt, dass Spannungen vermieden werden, insbesondere bei Schwenkbewegungen der Teilelemente 2.2, 3.2 in Bezug auf 4.2 und 4.1. Die kreisförmigen Streben 6.2' sind darüber hinaus stabiler an dem Anker 6.1 befestigt. Die Federn 6.3 sind speichenförmig angeordnet, so dass eine gleichmäßige Drehbewegung der Strebe 6.2' erfolgen kann. Gleiches gilt jeweils für die Kopplungseinrichtung 7.

Die Erfindung ist nicht auf die dargestellten Ausführungsbeispiele beschränkt. Insbesondere sind Änderungen und Kombinationen aus den einzelnen Ausführungsbeispielen im Rahmen der geltenden Patentansprüche möglich.

## Patentansprüche

1. Mikro-elektro-mechanischer Sensor (MEMS) (1) mit linear in einer x-y-Ebene bewegten Antriebselementen (2, 3, 4), welche auf einem Substrat angeordnet sind zur Ermittlung von drei Komponenten des Drehratenvektors des Substrats, wobei zwei Gruppen von Antriebselementen (2, 3; 4) existieren, die im Wesentlichen in rechtwinklig zueinander verlaufenden Richtungen angetrieben sind, wobei die rechtwinkelig zueinander bewegten Antriebselemente (2, 4; 3, 4) mittels einer drehbar auf dem Substrat gelagerten Kopplungseinrichtung (6, 7) zur Synchronisation der Bewegungen miteinander verbunden sind, und wobei Antriebselemente (2, 3) einer Gruppe parallel zueinander bewegbar sind und wobei mindestens jeweils zwei der parallel zueinander bewegten Antriebselemente (2,3) ebenfalls mit Kopplungseinrichtungen (5) verbunden sind.

2. MEMS nach dem vorherigen Anspruch, **dadurch gekennzeichnet, dass** mindestens jeweils zwei der parallel zueinander bewegten Antriebselemente (2, 3) mit vorzugsweise gleichartigen Kopplungseinrichtungen (5) verbunden sind, die in Antriebsrichtung starr sind und damit die Antriebsbewegung von jeweils zwei Antriebselementen (2, 3) synchronisieren.

3. MEMS nach einem oder mehreren der vorherigen Ansprüche, **dadurch gekennzeichnet, dass** der Sensor (1) mehrere Kopplungseinrichtungen (6, 7) zur Synchronisation der rechtwinklig zueinander ablaufenden Bewegungen aufweist und die Kopplungseinrichtungen (6, 7) gleichartig sind.

4. MEMS nach einem oder mehreren der vorherigen Ansprüche, **dadurch gekennzeichnet, dass** die Kopplungseinrichtung (6, 7) zur Synchroni sation der rechtwinklig zueinander ablaufenden Bewegung eine um einen Anker (6.1, 7.1) drehbare, vorzugsweise bogen- oder kreisförmige Strebe (6.2, 7.2; 6.2', 7.2') ist.

5. MEMS nach einem oder mehreren der vorherigen Ansprüche, **dadurch gekennzeichnet, dass** die Strebe (6.2, 7.2) im Bereich ihres ersten Endes mit dem in x-Richtung angetriebenen Antriebselement (2, 3) und im Bereich ihres zweiten Endes mit dem in y-Richtung angetriebenen Antriebselement (4) verbunden ist.

6. MEMS nach Anspruch 4, **dadurch gekennzeichnet, dass** zwischen der Strebe (6.2', 7.2') und dem Antriebselement (2, 3, 4) eine Federeinrichtung (6.4, 7.4) vorgesehen ist.

7. MEMS nach Anspruch 6, **dadurch gekennzeichnet, dass** die Federvorrichtung (6.4, 7.4) in Antriebsrichtung steif und rechtwinkelig zur Antriebsrichtung weich ausgebildet ist.

8. MEMS nach einem oder mehreren der vorherigen Ansprüche, **dadurch gekennzeichnet, dass** die Antriebselemente (2, 3, 4) pro Antriebsrichtung paarweise mit Teilelementen (2.1, 2.2; 3.1, 3.2; 4.1, 4.2) ausgebildet sind.

9. MEMS nach einem oder mehreren der vorherigen Ansprüche, **dadurch gekennzeichnet, dass** ein Antriebselement (2) in x-Richtung angetrieben und mit einem Anker (2.5) derart auf dem Substrat angeordnet ist, dass es ganz oder teilweise in y-Richtung auslenkbar ist zum Erfassen einer Corioliskraft, welche auf Grund einer Drehbewegung des Substrates um die z-Achse auftritt.

10. MEMS nach einem oder mehreren der vorherigen Ansprüche, **dadurch gekennzeichnet, dass** ein Antriebselement (3) in x-Richtung angetrieben und mit einem Anker (3.7) derart auf dem Substrat angeordnet ist, dass es ganz oder teilweise um die y-Achse schwenkbar ist zum Erfassen einer Corioliskraft, welche auf Grund einer Drehbewegung des Substrates um die y-Achse auftritt.

11. MEMS nach einem oder mehreren der vorherigen Ansprüche, **dadurch gekennzeichnet, dass** ein Antriebselement (4) in y-Richtung angetrieben und mit einem Anker (4.7) derart auf dem Substrat angeordnet ist, dass es ganz oder teilweise um die x-Achse schwenkbar ist zum Erfassen einer Corioliskraft, welche auf Grund einer Drehbewegung des Substrates um die x-Achse auftritt.

12. MEMS nach einem oder mehreren der vorherigen Ansprüche, **dadurch gekennzeichnet, dass** den Antriebselementen (2, 3, 4) Antriebselektroden zugeordnet sind.

13. MEMS nach einem oder mehreren der vorherigen Ansprüche, **dadurch gekennzeichnet, dass** die Antriebselemente (2, 3, 4) im Wesentlichen einen rechteckigen Grundriss aufweisen.

14. MEMS nach einem oder mehreren der vorherigen Ansprüche, **dadurch gekennzeichnet, dass** die Antriebselemente (2, 3, 4) Teilelemente (2.1, 2.2; 3.1, 3.2; 4.1, 4.2) aufweisen, welche in Gegenphase angetrieben sind.

15. MEMS nach einem oder mehreren der Ansprüche 8 bis 14, **dadurch gekennzeichnet, dass** die Teilelemente (2.1, 2.2; 3.1, 3.2; 4.1, 4.2) zumindest eines der Antriebselemente (2, 3, 4) an einem kippbar auf dem Substrat gelagerten Balken (3.4, 4.4) angeordnet sind.

## Claims

1. A micro-electromechanical sensor (MEMS) (1) having drive elements (2, 3, 4) displaced linearly in an X-Y plane and disposed on a substrate for determining three components of the rate of rotation vector of the substrate, wherein two groups of drive elements (2, 3; 4) are driven substantially in directions running at right angles to each other, wherein the drive elements (2, 4; 3, 4) displaced at right angles to each other are connected to each other by means of a coupling device (6, 7) rotationally supported on the substrate for synchronizing the displacements, and wherein drive elements (2, 3) of a group can be displaced parallel to each other, and wherein at least two of the drive elements (2, 3) displaced parallel to each other are also connected to coupling devices (5).

2. The MEMS according to the preceding claim, **characterized in that** at least two of the drive elements (2, 3) displaced parallel to each other are each connected to preferably identical coupling devices (5), said coupling devices being rigid in the drive direction and thus synchronizing the drive motions of two drive elements (2, 3) each.

3. The MEMS according to any one or more of the preceding claims, **characterized in that** the sensor (1) comprises a plurality of coupling devices (6, 7) for synchronizing the motions occurring at right angles to each other, and the coupling devices (6, 7) are identical.

4. The MEMS according to any one or more of the preceding claims, **characterized in that** the coupling device (6, 7) for synchronizing the motions occurring at right angles to each other is a preferably arc-shaped or circular bar (6.2, 7.2; 6.2', 7.2') rotatable about an armature (6.1, 7.1).

5. The MEMS according to any one or more of the preceding claims, **characterized in that** the bar (6.2, 7.2) is connected in the region of the first end thereof to the drive element (2, 3) driven in the X-direction, and in the region of the second end thereof to the drive element (4) driven in the Y-direction.

6. The MEMS according to Claim 4, **characterized in that** a spring device (6.4, 7.4) is provided between the bar (6.2', 7.2') and the drive element (2, 3, 4).

7. The MEMS according to Claim 6, **characterized in that** the spring device (6.4, 7.4) is rigid in the drive direction and compliant at right angles to the drive direction.

8. The MEMS according to any one or more of the preceding claims, **characterized in that** the drive elements (2, 3, 4) are implemented pairwise having partial elements (2.1, 2.2; 3.1, 3.2; 4.1, 4.2) for each drive direction.

9. The MEMS according to any one or more of the preceding claims, **characterized in that** one drive element (2) is driven in the X-direction and is disposed having an armature (2.5) on the substrate such that said element can be completely or partially deflected in the Y-direction for capturing a Coriolis force occurring due to a rotary motion of the substrate about the Z-axis.

10. The MEMS according to any one or more of the preceding claims, **characterized in that** one drive element (3) is driven in the X-direction and is disposed having an armature (3.7) on the substrate such that said element can be completely or partially pivoted about the Y-axis for capturing a Coriolis force occurring due to a rotary motion of the substrate about the Y-axis.

11. The MEMS according to any one or more of the preceding claims, **characterized in that** one drive element (4) is driven in the Y-direction and is disposed having an armature (4.7) on the substrate such that said element can be completely or partially pivoted about the X-axis for capturing a Coriolis force occurring due to a rotary motion of the substrate about the X-axis.

12. The MEMS according to any one or more of the preceding claims, **characterized in that** drive electrodes are associated with the drive elements (2, 3, 4).

13. The MEMS according to any one or more of the preceding claims, **characterized in that** the drive elements (2, 3, 4) substantially comprise a rectangular outline.

14. The MEMS according to any one or more of the preceding claims, **characterized in that** the drive elements (2, 3, 4) comprise partial elements (2.1, 2.2; 3.1, 3.2; 4.1,4.2) driven in antiphase.

15. The MEMS according to any one or more of the claims 8 through 14, **characterized in that** the partial elements (2.1, 2.2; 3.1, 3.2; 4.1, 4.2) of at least one of the drive elements (2, 3, 4) are disposed on a beam (3.4, 4.4) tiltably supported on the substrate.

## Revendications

1. Capteur microélectromécanique (MEMS) (1) avec des éléments d'entraînement (2, 3, 4) déplacés linéairement dans un plan x-y, qui sont disposés sur un substrat pour déterminer trois composants du vecteur de vitesse de rotation du substrat, sachant qu'il existe deux groupes d'éléments d'entraînement (2, 3 ; 4), qui sont entraînés dans des directions essentiellement perpendiculaires l'une à l'autre, sachant que les éléments d'entraînement (2, 4 ; 3, 4) déplacés perpendiculairement les uns aux autres sont reliés les uns avec les autres par un dispositif de couplage (6, 7) logé sur un palier rotatif sur le substrat pour la synchronisation des mouvements et sachant que des éléments d'entraînement (2, 3) d'un groupe sont déplaçables parallèlement les uns aux autres et sachant que, respectivement, deux au moins des éléments d'entraînement (2, 3) déplaçables parallèlement l'un à l'autre sont également reliés par des dispositifs de couplage (5).

2. MEMS selon la revendication précédente, **caractérisé en ce que**, respectivement, deux au moins des éléments d'entraînement (2, 3) déplacés parallèlement l'un à l'autre sont reliés par des dispositifs de couplage (5) de préférence de même type, qui sont rigides dans le sens d'entraînement et synchronisent ainsi le mouvement d'entraînement de respectivement deux éléments d'entraînement (2, 3).

3. MEMS selon l'une ou plusieurs des revendications précédentes, **caractérisé en ce que** le capteur (1) comporte plusieurs dispositifs de couplage (6, 7) pour la synchronisation des mouvements perpendiculaires l'un à l'autre et les dispositifs de couplage (6, 7) sont de même type.

4. MEMS selon l'une ou plusieurs des revendications précédentes, **caractérisé en ce que** le dispositif de couplage (6, 7) pour la synchronisation des mouvements perpendiculaires l'un à l'autre est une entretoise (6.2, 7.2 ; 6.2', 7.2') rotative autour d'un induit (6.1, 7.1), de préférence en forme d'arc ou de cercle.

5. MEMS selon l'une ou plusieurs des revendications précédentes, **caractérisé en ce que** l'entretoise (6.2, 7.2) est reliée dans la zone de sa première extrémité avec l'élément d'entraînement (2, 3) entraîné dans le sens x et, dans la zone de sa deuxième extrémité (2, 3), avec l'élément d'entraînement (4) entrainé dans le sens y.

6. MEMS selon la revendication 4, **caractérisé en ce qu'**il est prévu un dispositif de ressort (6.4, 7.4) entre l'entretoise (6.2', 7.2') et l'élément d'entraînement (2, 3, 4).

7. MEMS selon la revendication 6, **caractérisé en ce que** le dispositif de ressort (6.4, 7.4) est rigide dans le sens d'entraînement et mou dans le sens perpendiculaire au sens d'entraînement.

8. MEMS selon l'une ou plusieurs des revendications précédentes, **caractérisé en ce que** pour chaque sens d'entraînement, les éléments d'entraînement (2, 3, 4) sont formé en paires avec des éléments partiels (2.1,2.2; 3.1, 3.2; 4.1, 4.2).

9. MEMS selon l'une ou plusieurs des revendications précédentes, **caractérisé en ce qu'**un élément d'entraînement (2) est entraîné dans le sens x et disposé sur le substrat avec un induit (2.5) de manière à pouvoir être dévié complètement ou partiellement dans le sens y pour capter une force de Coriolis générée par un mouvement de rotation du substrat autour de l'axe z.

10. MEMS selon l'une ou plusieurs des revendications précédentes, **caractérisé en ce qu'**un élément d'entraînement (3) est entraîné dans le sens x et disposé sur le substrat avec un induit (3.7) de manière à pouvoir pivoter autour de l'axe y pour capter une force de Coriolis générée par un mouvement de rotation du substrat autour de l'axe y.

11. MEMS selon l'une ou plusieurs des revendications précédentes, **caractérisé en ce qu'**un élément d'entraînement (4) est entraîné dans le sens y et disposé sur le substrat avec un induit (4.7) de manière à pouvoir pivoter autour de l'axe x pour capter une force de Coriolis générée par un mouvement de rotation du substrat autour de l'axe x.

12. MEMS selon l'une ou plusieurs des revendications précédentes, **caractérisé en ce que** des électrodes d'entraînement sont attribuées aux éléments d'entraînement (2, 3, 4).

13. MEMS selon l'une ou plusieurs des revendications précédentes, **caractérisé en ce que** les éléments d'entraînement (2, 3, 4) présentent une vue en plan essentiellement rectangulaire.

14. MEMS selon l'une ou plusieurs des revendications précédentes, **caractérisé en ce que** les éléments d'entraînement (2, 3, 4) présentent des éléments partiels (2.1, 2.2 ; 3.1, 3.2 ; 4.1, 4.2) qui sont entraînés en opposition de phase.

15. MEMS selon l'une ou plusieurs des revendications 8 à 14, **caractérisé en ce que** les éléments partiels (2.1, 2.2 ; 3.1, 3.2 ; 4.1, 4.2) d'au moins un des éléments d'entraînement (2, 3, 4) sont disposés sur une barre (3.4, 4.4) logée sur palier basculant sur le substrat.
